# EUROPÄISCHE PATENTSCHRIFT

(11) **EP 2 340 183 B1**
(45) Veröffentlichungstag und Bekanntmachung des Hinweises auf die Patenterteilung: **09.10.2013**
(21) Anmeldenummer: 09776886.5
(22) Anmeldetag: 25.06.2009
(51) Int. Cl.: B60K 35/00, B60K 37/04, G06F 3/01

(54) **ANZEIGE- UND BEDIENSYSTEM IN EINEM KRAFTFAHRZEUG MIT NUTZERBEEINFLUSSBARER DARSTELLUNG VON ANZEIGEOBJEKTEN SOWIE VERFAHREN ZUM BETREIBEN EINES SOLCHEN ANZEIGE- UND BEDIENSYSTEMS**
DISPLAY AND CONTROL SYSTEM IN A MOTOR VEHICLE HAVING USER-ADJUSTABLE REPRESENTATION OF DISPLAYED OBJECTS, AND METHOD FOR OPERATING SUCH A DISPLAY AND CONTROL SYSTEM
SYSTÈME D'AFFICHAGE ET DE COMMANDE DANS UN VÉHICULE AUTOMOBILE COMPORTANT UNE REPRÉSENTATION, ACTIVABLE PAR L'UTILISATEUR, D'OBJETS D'AFFICHAGE ET PROCÉDÉ D'UTILISATION D'UN TEL SYSTÈME D'AFFICHAGE ET DE COMMANDE

(30) Priorität: 22.09.2008 DE 102008048825
(43) Veröffentlichungstag der Anmeldung: 06.07.2011
(73) Patentinhaber: Volkswagen Aktiengesellschaft, 38440 Wolfsburg (DE)
(72) Erfinder: WÄLLER, Christoph, 38106 Braunschweig (DE); BACHFISCHER, Katharina, 40476 Düsseldorf (DE)
(74) Vertreter: Obst, Bernhard
(86) Internationale Anmeldenummer: PCT/EP2009/004707
(87) Internationale Veröffentlichungsnummer: WO 2010/031454

(56) Entgegenhaltungen:
- EP-A1- 1 935 704
- EP-A2- 1 953 028
- DE-A1- 19 708 610
- DE-A1-102006 037 156
- DE-U1-212006 000 087

## Beschreibung

Die Erfindung betrifft ein Anzeige- und Bediensystem mit den Merkmalen des Oberbegriffs des Patentanspruchs 1 sowie ein Verfahren zum Betreiben eines solchen Anzeige- und Bediensystems mit den Merkmalen des Oberbegriffs des Patentanspruchs 9.

In Kraftfahrzeugen werden Anzeige- und Bediensysteme eingesetzt, um den Nutzern, beispielsweise einem Fahrer oder einem oder mehreren Beifahrern Informationen zu vermitteln. Darüber hinaus werden solche Systeme verwendet, um fahrzeuginterne und/oder fahrzeugexterne Systeme, Einrichtungen usw. mittels erfasster Nutzereingaben zu bedienen. Hierbei ist es aus dem Stand der Technik bekannt, Anzeigevorrichtungen einzusetzen, die eine so genannte freiprogrammierbare Anzeigefläche umfassen. Unter einen freiprogrammierbaren Anzeigefläche wird eine Anzeigefläche verstanden, bei der an derselben Position zeitlich nacheinander unterschiedliche Inhalte grafisch dargestellt werden können. Beispiele für freiprogrammierbare Anzeigeflächen sind beispielsweise LCD-Displays, TFT-Displays, aber auch Projektionsdisplays. Zusätzlich zu einer Anzeigevorrichtung umfassen die Anzeige- und Bediensysteme eine Erfassungsvorrichtung zum Erfassen von Nutzereingaben. Die Erfassungsvorrichtung kann unterschiedliche Erfassungselemente und Einheiten umfassen, um Nutzereingaben auf unterschiedliche Weise bzw. unterschiedlich modal zu erfassen.

Aufgrund einer starken Ausweitung der in Kraftfahrzeugen genutzten Funktionen und Funktionalitäten, insbesondere im Bereich moderner Medien, ist ein Bedarf an Darstellungsfläche zum Vermitteln von Informationen in der Vergangenheit kontinuierlich gestiegen. Je komplexer und vielfältiger die fahrzeuginternen und/oder fahrzeugexternen Funktionen und Funktionalitäten sind, die mittels eines solchen Anzeige- und Bediensystems verknüpft sind, desto mehr Platz wird für die Anzeige der Informationen benötigt. Mit der steigenden Anzahl an möglichen ausgebbaren Informationen geht jedoch die Schwierigkeit einher, die Informationsausgabe so zu gestalten, dass sie die Bedürfnisse eines jeden Nutzers möglichst optimal befriedigt. Unterschiedliche Nutzer haben unterschiedliche Präferenzen hinsichtlich der Informationen, die sie ausgegeben erhalten möchten. Daher sehen einige Ausführungsformen von Anzeige- und Bediensystemen vor, dass eine Anordnung von Anzeigeobjekten durch einen Nutzer beeinflussbar ist.

Als Anzeigeobjekte werden im Folgenden alle grafischen Darstellungen betrachtet, die zur Ausgabe von Informationen auf einer Anzeigefläche dargestellt werden. Diese können beispielsweise ein Textfeld, ein grafisch dargestelltes Anzeigeinstrument, virtuelle Bedienelemente, ein grafisches Ausgabefeld eines Mediaplayers, beispielsweise eines DVD-Players oder eines Fernsehbilds usw., sein.

Besonders bevorzugt werden in Kraftfahrzeugen freiprogrammierbare Anzeigeflächen eingesetzt, die mit einer berührungsempfindlichen Erfassungseinheit gemeinsam als Touchscreen ausgebildet sind. Diese können als Nutzereingabe eine Berührung der Anzeigefläche durch ein Betätigungselement, beispielsweise einen oder mehrere Finger eines Nutzers, als Nutzereingabe erfassen.

Aus der EP 1 935 704 A1 ist eine Anzeige- und Bedienvorrichtung in einem Kraftfahrzeug mit von einer Position einer Bedienhand abhängig eingeblendeten Menüs bekannt. Abhängig von der Position einer Bedienhand wird zwischen einem Anzeigemodus und einem Bedienmodus gewechselt, in dem zunächst ein so genanntes Sofortmenü dargestellt wird, dessen Darstellung von einer Anwesenheit der Bedienhand in einem relativ zu der Anzeigefläche festgelegten so genannten Haltevolumen abhängig ist. Im Bedienmodus werden die Bedienelemente in einer für eine Bedienung optimierten Weise dargestellt. Mindestens ein Bedienelement oder eine einem Bedienelemente zugeordnete Bedienelementzuordnung wird im Bedienmodus vergrößert im Verhältnis zum Anzeigemodus dargestellt.

Aus der DE 10 2006 037 156 A1 sind eine interaktive Bedienvorrichtung und ein Verfahren zum Betreiben der interaktiven Bedienvorrichtung bekannt. Dort ist beschrieben, dass bei einer Annäherung eines Körperteils an eine Anzeige- und Bedienvorrichtung Bedienelemente, für die eine Bedienabsicht ermittelt ist, vor ihrer Aktivierung optimiert für ein Bedienen dargestellt werden.

Aus der DE 21 2006 000 087 U1 ist eine tragbare elektronische Vorrichtung mit Schnittstellenrekonfigurationsmodus bekannt. Die tragbare elektronische Vorrichtung weist eine berührungsempfindliche Anzeigevorrichtung, ein oder mehrere Prozessoren, Speicher und einen oder mehrere Programme auf, wobei das eine oder die mehreren Programme in dem Speicher abgelegt und zur Ausführung auf einem oder den mehreren Prozessoren konfiguriert sind. Die Programme enthalten Anweisungen zum Anzeigen einer ersten Mehrzahl von Icons in einem ersten Bereich auf der berührungsempfindlichen Anzeigevorrichtung. Anweisungen zum Detektieren einer ersten vordefinierten Benutzeraktion in Bezug auf die berührungsempfindliche Anzeigevorrichtung zum Initiieren eines vordefinierten Benutzerschnittstellenrekonfigurationsprozesses und Anweisungen zum Variieren der Position eines oder mehrerer der Icons aus der ersten Mehrzahl von Icons in Reaktion auf das Detektieren der ersten vordefinierten Benutzeraktion, wobei das Variieren ein Variieren der Positionen des einen oder der mehreren Icons um entsprechende mittlere Positionen umfasst. Über das Variieren der Positionen kann einem Benutzer intuitiv angezeigt werden, dass die Positionen des einen oder der mehreren Icons durch den Benutzer rekonfiguriert werden können. Der Benutzer kann die Positionen des einen oder der mehreren Icons modifizieren, anpassen und/oder rekonfigurieren.

Aus der DE 197 08 610 A1 ist eine Pixel-Matrix-Anzeigeeinrichtung für Transportsysteme bekannt, die durch ein organisches lichtemittierendes Element realisiert ist. Beschrieben ist ein Anzeigeelement, welches organische lichtemittierende Dioden (OLED) umfasst. Ein solches Display kann an die Geometrie eines Armaturenbretts eines Fahrzeugs angepasst werden.

Um möglichst viele Informationen zeitgleich ausgeben zu können, existiert ein Bedürfnis, eine Ausdehnung der Anzeigefläche zu steigern. Je größer die Anzeigefläche jedoch wird, desto schwieriger sind alle Darstellungsbereiche, d.h. alle Bereiche der Anzeigefläche, durch ein Betätigungselement des Nutzers, beispielsweise einen oder mehrere Finger des Nutzers, erreichbar.

Der Erfindung liegt die technische Aufgabe zugrunde, eine Anzeige- und Bedienvorrichtung sowie ein Verfahren zu dessen Betrieb zu schaffen, die es ermöglichen, eine Anzeigevorrichtung mit einer ausgedehnten Anzeigefläche zu verwenden und zugleich eine einfache Bedienung, insbesondere Modifizierung der Anordnung der einzelnen Anzeigeobjekte, durch einen Nutzer zu ermöglichen.

Die technische Aufgabe wird durch ein Anzeige- und Bediensystem mit den Merkmalen des Patentanspruchs 1 sowie ein Verfahren zum Betreiben einer solchen Anzeige- und Bedienvorrichtung mit den Merkmalen des Patentanspruchs 9 erfindungsgemäß gelöst. Vorteilhafte Ausgestaltungen der Erfindung ergeben sich aus den Unteransprüchen.

Hierbei ist vorgesehen, ein Anzeige- und Bediensystem, geeignet für ein Kraftfahrzeug, mit nutzerbeeinflussbarer Darstellung von Anzeigeobjekten, welches eine Anzeigevorrichtung mit einer Anzeigefläche, eine Erfassungsvorrichtung, mit der Nutzereingaben erfassbar sind, und eine Steuereinrichtung umfasst, die eine grafische Darstellung der Anzeigeobjekte auf der Anzeigevorrichtung steuert, so auszugestalten, dass über eine Nutzereingabe ein Modifizierungsmodus aktivierbar ist, in dem eine grafische Darstellung aller Anzeigeobjekte zumindest teilweise in einem Teilbereich der Anzeigefläche erfolgt. Gemäß der Erfindung ist vorgesehen, dass im Modifiziermodus die Anzeigeobjekte über eine weitere Nutzereingabe hinsichtlich ihrer Position und/oder Größe in dem Teilbereich modifiziert werden können. Ein entsprechendes Verfahren umfasst die Schritte: Darstellen der Anzeigeobjekte in einem Anzeigemodus verteilt über die Anzeigefläche; Erfassen und Auswerten von Nutzereingaben und Beeinflussen der Darstellung der Anzeigeobjekte abhängig von den erfassten und ausgewerteten Nutzereingaben, wobei die Nutzereingaben hinsichtlich einer Eingabe zum Aktivieren eines Modifiziermodus ausgewertet werden und bei Erkennen einer solchen Nutzereingabe der Modifiziermodus aktiviert wird, in dem alle Anzeigeobjekte zumindest teilweise, vorzugsweise vollständig, in einem Teilbereich der Anzeigefläche dargestellt werden. Durch ein Darstellen aller Anzeigeobjekte, zumindest teilweise, in dem Teilbereich der Anzeigefläche, wird ein Zugriff auf die Anzeigeobjekte durch den Nutzer, beispielsweise für eine berührende Betätigung, deutlich vereinfacht, da nur noch der Teilbereich in einem Greifraum eines Nutzers befindlich sein muss, der eine Bedienung oder Modifizierung der Anzeigeobjekte auf der Anzeigefläche bewirken will. Als Greifraum wird hier jener Raumbereich verstanden, in dem ein auf einem Fahrzeugsitz sitzender Nutzer Gegenstände mit seinen Händen greifen oder berühren kann. Insbesondere bei großen Anzeigeflächen, bei denen sich die Anzeigefläche aus einem Greifraum eines auf einem Sitz sitzenden Nutzers hinauserstreckt, ist die Erfindung somit von besonderem Vorteil. Obwohl die Anzeigeobjekte in einem Anzeigemodus über die gesamte Anzeigefläche verteilt sein können, ist eine Modifizierung und/oder auch Bedienung in einem Teilbereich der Anzeigefläche, welche in dem Greifraum des Nutzers liegt, möglich.

Es ist vorgesehen, dass Positionsänderungen und Größenskalierungen der Anzeigeobjekte in dem Teilbereich entsprechend einer gewählten Darstellung in dem Teilbereich (z.B. verkleinert) bei einem Wechsel in den Anzeigemodus entsprechend angepasst werden. D.h., dass beispielsweise eine Verschiebung eines Anzeigeobjekts um eine Strecke in dem Teilbereich, in dem die Anzeigeobjekte verkleinert dargestellt sind, im Anzeigemodus einer Verschiebung um eine entsprechend größere Strecke entspricht.

Bei einer Ausführungsform der Erfindung ist vorgesehen, dass die Anzeigeobjekte in dem Modifiziermodus in dem Teilbereich relativ zueinander hinsichtlich ihrer Position und/oder ihrer Größe so dargestellt werden wie in einem Anzeigemodus, in dem die Anzeigeobjekte verteilt über die gesamte Anzeigefläche dargestellt sind. Eine Ausführungsform sieht vor, dass in dem Teilbereich in dem Modifiziermodus eine grafische Darstellung der gesamten Anzeigefläche, wie sie in dem Anzeigemodus ausgegeben wird, verkleinert dargestellt ist oder wird.

Bei einigen Ausführungsformen kann abweichend hiervon vorgesehen sein, dass die einzelnen Anzeigeobjekte in dem Teilbereich verändert dargestellt sind. Dies ist insbesondere von Vorteil, wenn die Anzeigeobjekte virtuell ausgestaltete Bedienelemente umfassen und die Erfassungsvorrichtung eine berührungsempfindliche Positionserfassungseinheit umfasst, da es so möglich ist, die virtuellen Bedienelemente eines Anzeigeobjekts bei einer Darstellung im Modifiziermodus relativ vergrößert in Bezug auf die Gesamtgröße des jeweiligen Anzeigeobjekts darzustellen, um eine Bedienbarkeit über eine berührende Bedienung zu erleichtern.

Bei einer Weiterbildung der Erfindung ist vorgesehen, dass während des Änderns der Position und/oder der Größe eines Anzeigeobjekts in dem Teilbereich, vorzugsweise zusätzlich zu einer Darstellung in dem Teilbereich, zumindest ein Umriss des Objekts an der Stelle und in der Größe dargestellt wird, an der bzw. in der das entsprechende Anzeigeobjekt im Anzeigemodus angezeigt würde oder angezeigt wird. Dies bedeutet, dass die in dem Teilbereich vorgenommene Änderung zeitgleich auch an der Stelle der Anzeigefläche für den Nutzer nachvollziehbar ist, an der das entsprechende Anzeigeobjekt im Anzeigemodus angezeigt würde bzw. nachfolgend angezeigt wird. Hierdurch ist es für den Nutzer einfacher, eine Positionierung und Größendarstellung eines Anzeigeobjekts seinen eigenen Bedürfnissen entsprechend auszuwählen. Ebenso ist es möglich, um die Positionierung relativ zu anderen Anzeigeobjekten zu erleichtern, auch von den übrigen Anzeigeobjekten jeweils deren Umriss so darzustellen, wie er im Anzeigemodus dargestellt würde oder wird. Um eine Zuordnung/Erkennung der Anzeigeobjekte durch den Nutzer zu erleichtern, kann auch noch eine Kennung, ein Titel oder Ähnliches mit angezeigt werden.

Besonders bevorzugte Ausführungsformen sehen vor, dass die Erfassungsvorrichtung eine berührungslos messende Erfassungseinheit umfasst, die eine Annäherung eines Betätigungselements eines Nutzers, insbesondere einer Oberkörperextremität, besonders bevorzugt einer Hand oder eines Fingers eines Nutzers, als Nutzereingabe erfassen kann. Somit wird als eine der Nutzereingaben eine Annäherung eines Betätigungselements des Nutzers erfasst. Alternativ kann bei einigen Ausführungsformen eine über eine berührungsempfindliche Positionserfassungseinheit erfasste berührende Betätigung als Nutzereingabe zum Aktivieren des Modifizierungsmodus genutzt werden.

Um nicht bei jeder Annäherung ein Aktivieren des Modifiziermodus zu bewirken, ist bei einer bevorzugten Ausführungsform vorgesehen, dass dem Modifiziermodus eine Geste zugeordnet wird. Somit umfasst eine bevorzugte Ausführungsform eine Gestenerkennungseinheit. Eine solche Einheit ist in der Lage, eine mittels des Betätigungselements ausgeführte Geste zu erkennen. Vorzugsweise ist vorgesehen, dass die berührungslos messende Erfassungseinheit eine einer Aktivierung des Modifiziermodus zugeordnete Geste eines Betätigungselement des Nutzers bei einer Annäherung erfassen kann bzw. erfasst und nur bei Erfassen dieser dem Modifiziermodus zugeordneten Geste den Modifiziermodus automatisch aktiviert. Dies bedeutet, dass der Aktiviermodus automatisch nur aktiviert wird, wenn die dem Modifiziermodus zugeordnete Geste bei der Gestenerkennung erkannt ist. Als Gesten können beispielsweise statische Gesten verwendet werden, die über eine Hand oder Fingerhaltung erzeugt werden können. Besonders bevorzugt wird eine Annäherung einer flachen oder gespreizten Handhaltung in einer im Wesentlichen parallel zu der Anzeigefläche orientierten Annäherung als Aktivierungsgeste dem Modifizierungsmodus zugeordnet. Nähert der Nutzer somit seine flache ausgestreckte Hand, die parallel zur Anzeigefläche orientiert ist, dieser an, so wird automatisch in den Modifiziermodus gewechselt. Eine Modifizierung der Anordnung und/oder der Größe der einzelnen Anzeigeobjekte in dem Teilbereich erfolgt vorzugsweise über berührende Betätigungen. Beispielsweise kann durch eine streifende Bewegung des Betätigungselements, beispielsweise eines Zeigefingers, der die Anzeigefläche im Bereich der Darstellung eines Anzeigeobjekts berührt und dann ohne eine Unterbrechung der Berührung entlang der Oberfläche gestreift wird, das entsprechende Objekt entlang des streifenden Weges auf der Anzeigefläche verschoben werden. Für eine Größenskalierung können die Anzeigeobjekte einen speziellen Angriffspunkt aufweisen. Wird das Anzeigeobjekt an diesem speziellen Angriffspunkt berührt und anschließend eine streifende Bewegung auf der Anzeigefläche durch das Betätigungselement ausgeführt, so wird dieses als Größenskalierungseingabe interpretiert.

Bei einer besonders bevorzugten Ausführungsform umfasst die Erfassungsvorrichtung eine mehrfach berührungsempfindliche Positionserfassungseinheit, die zeitgleich mehrere voneinander getrennte Berührpositionen erfassen kann. Wird eine solche mehrfach berührungsempfindliche Positionserfassungseinheit verwendet, so kann beispielsweise eine Berührung der Oberfläche an beispielsweise vier oder fünf voneinander beabstandeten Punkten zeitgleich als Aktivierungsgeste verwendet werden. Die voneinander beabstandeten Positionen können beispielsweise durch vier bis fünf zeitgleich aufgesetzte Finger einer aufgespreizten Hand erzeugt werden. Bei solch einer Ausführungsform ist die Gestenerkennungseinheit ausgebildet, Berührungsgesten auszuwerten und zu erkennen.

Mit einer solchen mehrfach berührungsempfindlichen Positionserfassungseinheit ist es darüber hinaus besonders einfach möglich, die Anzeigeobjekte zu skalieren und/oder auf der Anzeigefläche zu rotieren. Eine Skalierung kann beispielsweise über das zeitgleiche Aufsetzen von zwei Fingern z.B. von Daumen und Zeigefinger sowie eine Spreiz- oder Aufeinander-Zu-Bewegung zum Erzeugen einer Größerskalierung bzw. Kleinerskalierung bezogen auf eine Richtung erfolgen, entlang derer die Spreizbewegung bzw. Aufeinander-Zu-Bewegung von Zeigefinger und Daumen oder der beiden Finger erfolgt. Analog kann eine Drehung bewirkt werden, indem zwei voneinander beabstandete Punkte auf der Anzeigefläche beispielsweise durch Zeigefinger und Daumen einer Hand berührt werden und eine Drehbewegung um einen zwischen den beiden Berührpunkten gelegenen Drehpunkt ausgeführt wird. Die Drehung kann bei einer Ausführungsform an dem Anzeigeobjekt ausgeführt werden, in dessen Darstellungsbereich die zur Modifizierung vorgenommenen Bewegungsgesten vorgenommen werden. Bei anderen Ausführungsformen kann das entsprechende Anzeigeobjekt über eine einfache Berührung zuvor aktiviert werden und die nachfolgende skalierende und/oder drehende bzw. positionsverändernde Betätigungshandlung an einer beliebigen Stelle innerhalb des Teilbereichs der Anzeigefläche vorgenommen werden.

Bei einer bevorzugten Ausführungsform wird der Teilbereich so festgelegt, dass dieser vollständig in einem Griffbereich des Nutzers liegt, in dem der auf einem Fahrzeugsitz sitzende Nutzer mit einer als Betätigungselement genutzten Oberkörperextremität jeden Raumpunkt berühren kann. Beispielsweise wird bei einer Ausführungsform der Teilbereich abhängig von der Position festgelegt, an die sich der Nutzer bei Ausführen einer Aktivierungsgeste ännähert. Ist als Aktivierungsgeste eine Annäherung mit einer aufgespreizten, parallel zur Anzeigefläche orientierten Hand vorgesehen, so kann eine Größe des Teilbereichs angepasst an eine erfasste Größe der aufgespreizten Hand festgelegt werden. Hierdurch wird sichergestellt, dass der festgelegte Teilbereich immer sicher im Griffbereich des jeweiligen Nutzers liegt, unabhängig von der physiologischen Größe des jeweiligen Nutzers. Ferner ist es möglich, für einen Beifahrer und einen Fahrer unterschiedliche Teilbereiche für eine Modifizierung der Anzeigeobjekte festzulegen.

Besonders vorteilhafte Ausführungsformen der Erfindung sehen vor, dass die Anzeigefläche in ein Armaturenbrett des Kraftfahrzeugs integrierbar ist. Besonders bevorzugt erstreckt sich die Anzeigefläche über mehr als die Hälfte einer Breite des Armaturenbretts und besonders bevorzugt über die gesamte Breite des Armaturenbretts.

Alternativ zu einer verkleinerten Darstellung der Anzeigefläche, wie sie in einem Anzeigemodus ausgegeben wird, können die Anzeigeobjekte in dem Modifiziermodus auch so dargestellt werden, dass von jedem der Anzeigeobjekte zumindest ein Darstellungsbereich nicht durch andere Anzeigeobjekte überdeckt ist und für eine individuelle Berührung durch das Betätigungselement des Nutzers bereitsteht, um dieses Anzeigeobjekt an- oder auszuwählen. Bei einer solchen Ausführungsform kann es vorgesehen sein, dass die einzelnen Anzeigeobjekte quasi in den Teilbereich hineingezogen werden. Ist als Aktivierungsgeste erneut eine Annäherung einer aufgespreizten oder flachen Hand, die parallel zu der Anzeigefläche orientiert ist, vorgesehen, so können bei einer Ausführungsform die einzelnen Anzeigeobjekte in Abhängigkeit von einem Abstand von der Anzeigefläche beim Ausführen der Aktivierungsgeste die einzelnen Anzeigeobjekte von dieser flach ausgestreckten Hand angezogen werden. Hierbei ist bei einer Ausgestaltung vorgesehen, dass sich jeweils mindestens ein Abschnitt oder Teil des Darstellungsbereichs des Anzeigeobjekts in dem Teilbereich befindet, wenn die zur Aktivierung des Modifiziermodus auszuführende Geste abgeschlossen ist. Anschließend kann der Nutzer dann eine Modifizierung der Anzeigeobjekte vornehmen, indem er zunächst eines der Anzeigeobjekte an- oder auswählt, indem er dieses innerhalb seines Darstellungsbereichs berührt. Die weitere Modifizierung kann analog zu der oben beschriebenen Modifizierung ausgeführt werden.

Die Merkmale des erfindungsgemäßen Verfahrens bzw. der erfindungsgemäßen Vorrichtung weisen jeweils dieselben Vorteile wie die entsprechenden Merkmale der erfindungsgemäßen Vorrichtung bzw. des erfindungsgemäßen Verfahrens auf.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung einer Anzeige- und Bedienvorrichtung in einem Kraftfahrzeug;
- Fig. 2: eine schematische Darstellung eines Kraftfahrzeugcockpits mit einer in das Armaturenbrett integrierten Anzeigefläche, auf der Anzeigeobjekte in einem Anzeigemodus dargestellt sind;
- Fig. 3: eine Ansicht des Kraftfahrzeugscockpits nach Fig. 2, bei dem über eine ausgespreizte Hand ein Modifiziermodus aktiviert ist;
- Fig. 4: eine schematische Ansicht des Kraftfahrzeugcockpits nach Fig. 2, bei der die Anzeigeobjekte im Modifiziermodus dargestellt sind;
- Fig. 5: eine schematische Darstellung des Kraftfahrzeugscockpits nach Fig. 2, bei der einzelne Anzeigeobjekte im Modifiziermodus modifiziert werden;
- Fig. 6: eine schematische Darstellung des Kraftfahrzeugcockpits nach Fig. 2, bei dem über eine ausgestreckte Hand der Anzeigemodus erneut aktiviert wird;
- Fig. 7: eine schematische Ansicht des Kraftfahrzeugcockpits nach Fig. 2, in der die Anzeigeobjekte nach ihrer Modifizierung im Anzeigemodus dargestellt sind;
- Fig. 8: eine schematische Darstellung eines Kraftfahrzeugcockpits mit einer in das Armaturenbrett integrierten Anzeigevorrichtung, auf der Anzeigeobjekte im Anzeigemodus dargestellt sind; und
- Fig. 9: eine schematische Darstellung des Kraftfahrzeugcockpits nach Fig. 8, bei der die Anzeigeobjekte beim Ausführen einer Aktivierungsgeste zumindest mit einem Abschnitt ihres Darstellungsbereichs in einen Teilbereich der Anzeigefläche bewegt werden.

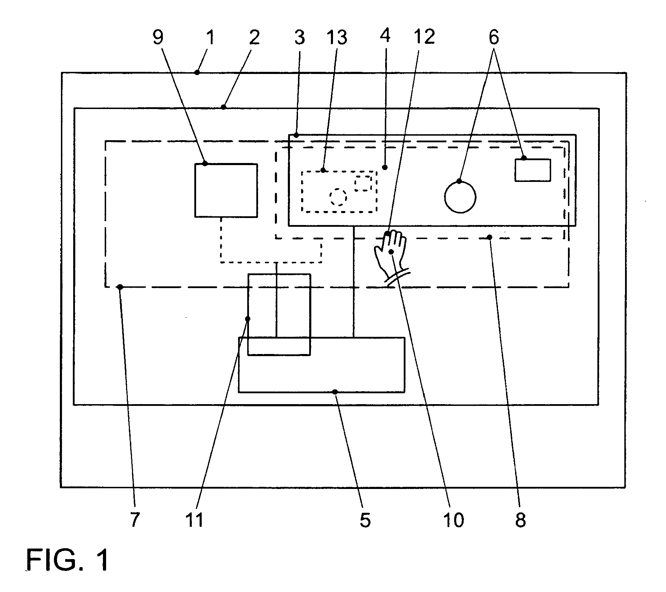

In Fig. 1 ist schematisch ein Kraftfahrzeug 1 dargestellt, welches eine Anzeige- und Bedienvorrichtung 2 umfasst. Die Anzeige- und Bedienvorrichtung 2 umfasst eine Anzeigevorrichtung 3 mit einer freiprogrammierbaren Anzeigefläche 4. Bei der Anzeigevorrichtung 3 kann es sich um eine beliebige Anzeigevorrichtung handeln, beispielsweise um eine LCD-Anzeigevorrichtung, eine TFT-Anzeigevorrichtung oder auch eine Projektionsvorrichtung. Die Anzeigevorrichtung ist mit einer Steuereinrichtung 5 gekoppelt, die eine Darstellung von Anzeigeobjekten 6 auf der Anzeigefläche 4 der Anzeigevorrichtung 3 steuert. Die Anzeigeobjekte 6 können beispielsweise so genannte "Widgets" sein, welche Zeigerelemente, Bedienelemente, Textfelder, Ausgabeflächen eines Multimediaplayers, insbesondere eine Ausgabefläche eines Videoplayers oder Fernsehers usw., sein können. Die Anzeige- und Bedienvorrichtung 2 umfasst ferner eine Erfassungsvorrichtung 7 zum Erfassen von Nutzereingaben eines Nutzers. Die Erfassungsvorrichtung 7 kann unterschiedliche Erfassungseinheiten umfassen. In der dargestellten Ausführungsform umfasst die Erfassungsvorrichtung 7 eine mit der Anzeigevorrichtung 3 gekoppelte mehrfach berührungsempfindliche Positionserfassungseinheit 8, die mit der Anzeigevorrichtung 3 als Touchscreen ausgebildet ist. Eine mehrfach berührungsempfindliche Positionserfassungseinheit kann zeitgleich die Positionen unterschiedlicher Berührpositionen, d.h. Mehrfachberührungen, detektieren. Zusätzlich umfasst die Erfassungsvorrichtung 7 eine berührungslos messende Positionserfassungseinheit 9. Berührungslos messende Positionserfassungseinheiten, die eine Position eines Betätigungselements vor der Anzeigefläche 4 im Raum dreidimensional erfassen und bestimmen können, können unterschiedlich ausgestaltet sein. Dem Fachmann sind kamerabasierte Systeme oder Systeme bekannt, bei denen über in Fahrzeugsitzen integrierte Sendeeinheiten Hochfrequenzsignale in den Nutzer eingekoppelt werden, die über benachbart zu der Anzeigevorrichtung angeordnete Empfangseinheiten empfangen und hinsichtlich ihrer Signalstärke ausgewertet werden. Ebenso sind Systeme bekannt, die im infraroten Wellenlängenbereich erzeugte und emittierte Strahlung, die an dem Betätigungselement bei einer Annäherung reflektiert wird, mittels mehrerer beispielsweise als Photodioden ausgestaltete Empfänger empfangen und eine Positionsbestimmung anhand einer empfangenen reflektierten Intensität der Infrarotstrahlung ermitteln.

Ist die mehrfach berührungsempfindliche Positionserfassungseinheit 8 als kapazitiv messende Einheit ausgebildet, so kann auch diese eine berührungslos messende Positionserfassungseinheit sein bzw. als solche verwendet werden.

Wird ein Betätigungselement, welches hier schematisch als Hand 10 dargestellt ist, in einer ausgestreckten Form an die Anzeigefläche 4 angenähert, so wird dieses bei einer Ausführungsform als eine Aktivierungsgeste eines Modifiziermodus der Anzeige- und Bedienvorrichtung 2 interpretiert. Um diese Geste zu erkennen, ist eine Gestenerkennungseinheit 11 vorgesehen. Diese kann in der Erfassungsvorrichtung 7 und/oder der Steuereinrichtung 5 oder ganz oder teilweise separat ausgebildet sein. Wird die Aktivierungsgeste erkannt, so wird automatisch ein Modifiziermodus der Anzeige- und Bedienvorrichtung 2 aktiviert. In diesem Modifiziermodus wird bei einer Ausführungsform die Ansicht der gesamten Anzeigefläche, wie sie im Anzeigemodus ausgegeben wird, verkleinert in einem Teilbereich 13 der Anzeigefläche 4 zur Anzeige gebracht. Der Teilbereich 13 ist so festgelegt, dass er in einem Griffbereich des Betätigungselements des Nutzers liegt. Dies bedeutet, dass der Nutzer mit einem Teil der Hand 10, vorzugsweise einem Zeigefinger 12 jeden Punkt des Griffbereichs, d.h. jeden Punkt des Teilbereichs der Anzeigefläche, mühelos berühren kann, während der Nutzer auf einem Fahrzeugsitz (nicht dargestellt) des Kraftfahrzeugs 1 sitzt.

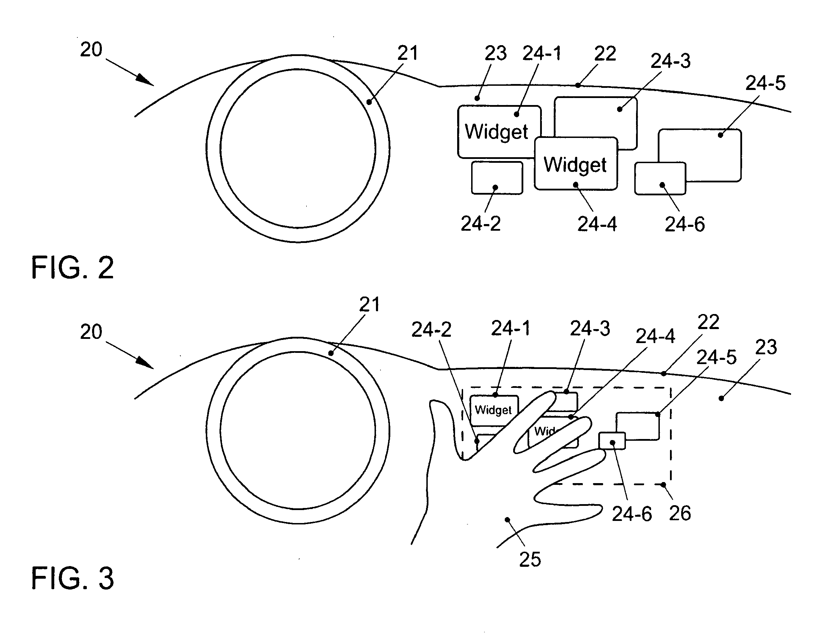

In Fig. 2 ist schematisch eine Ansicht eines Kraftfahrzeugcockpits 20 dargestellt. Ein Bereich rechts von einem Lenkrad 21 eines Armaturenbretts 22 ist als Anzeigefläche 23 ausgebildet, welche mit einer berührungsempfindlichen Mehrfachpositionserfassungseinheit integral als Touchscreen ausgebildet ist. Die Anzeigefläche 23 kann beispielsweise als TFT-Fläche ausgebildet sein. Auf der Anzeigefläche 23 sind verteilt Anzeigeobjekte 24-1 bis 24-6 schematisch dargestellt.

Zusätzlich ist eine nicht dargestellte berührungslos messende Positionserfassungseinheit vorgesehen, die mit einer Gestenerkennungseinheit gekoppelt ist. Wird, wie dies in Fig. 3 dargestellt ist, eine ausgespreizte Hand 25 angenähert, so wird ein Modifiziermodus der Anzeige- und Bedienvorrichtung aktiviert, deren Bestandteil die Anzeigefläche 23 ist. Hierbei werden die Anzeigeobjekte 24-1 bis 24-6 verkleinert in einem Teilbereich 26 dargestellt. In dem Teilbereich 26 ist bei dieser Ausführungsform die Ansicht der Anzeigefläche 23, wie sie im Anzeigemodus gemäß Fig. 2 dargestellt ist, verkleinert wiedergegeben.

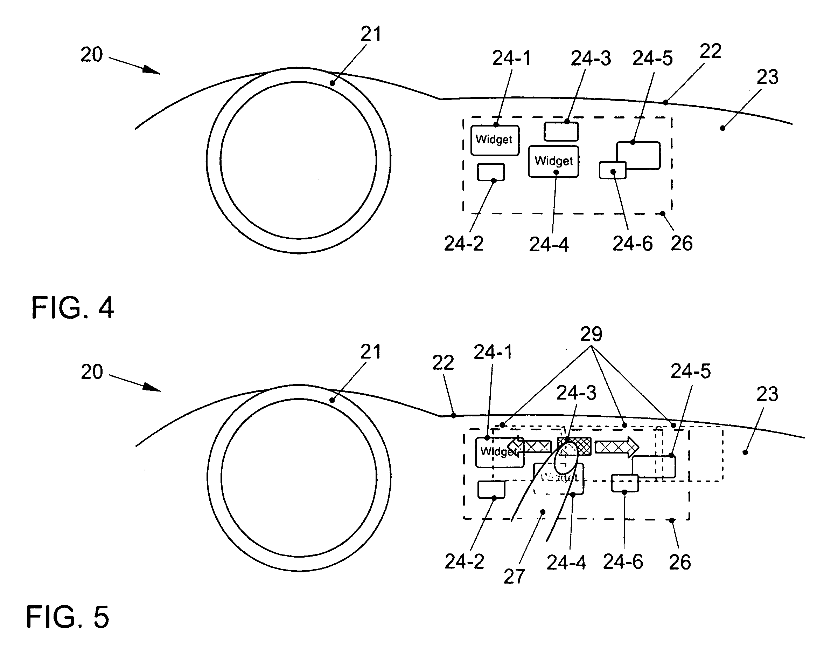

In Fig. 4 ist die Anzeigefläche 23 im Modifiziermodus schematisch dargestellt.

Wie in Fig. 5 angedeutet ist, können die einzelnen Anzeigeobjekte 24-1 bis 24-6 über erfasste Betätigungshandlungen, hier beispielsweise eine streifende Bewegung, eines Fingers 27 beispielsweise hinsichtlich ihrer Position innerhalb des Teilbereichs 26 modifiziert werden, wie dies über die Pfeile 28 angedeutet ist. Während der Modifikation können zusätzlich zu dem modifizierten Anzeigeobjekt 24-3 dessen Umrisse 29 auf der Anzeigefläche dargestellt werden, die das entsprechende Anzeigeobjekt 24-3 im Anzeigemodus einnehmen würde.

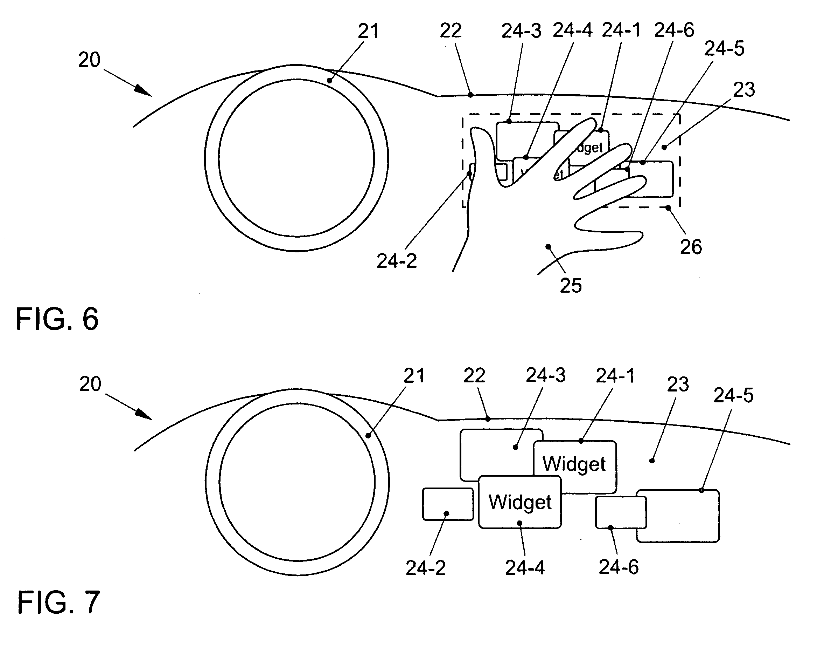

In Fig. 6 ist dargestellt, dass über eine erneute Annäherung der ausgespreizten Hand 25 an die Anzeigefläche 23 eine Umschaltung aus dem Modifiziermodus in den Anzeigemodus nach einem Modifizieren der Anzeigeobjekte in dem Teilbereich 26 vorgenommen werden kann.

In Fig. 7 ist die Ansicht des Kraftfahrzeugcockpits 20 dargestellt, die sich im Anzeigemodus nach der Modifizierung der einzelnen Anzeigeobjekte 24-1 bis 24-6 ergibt.

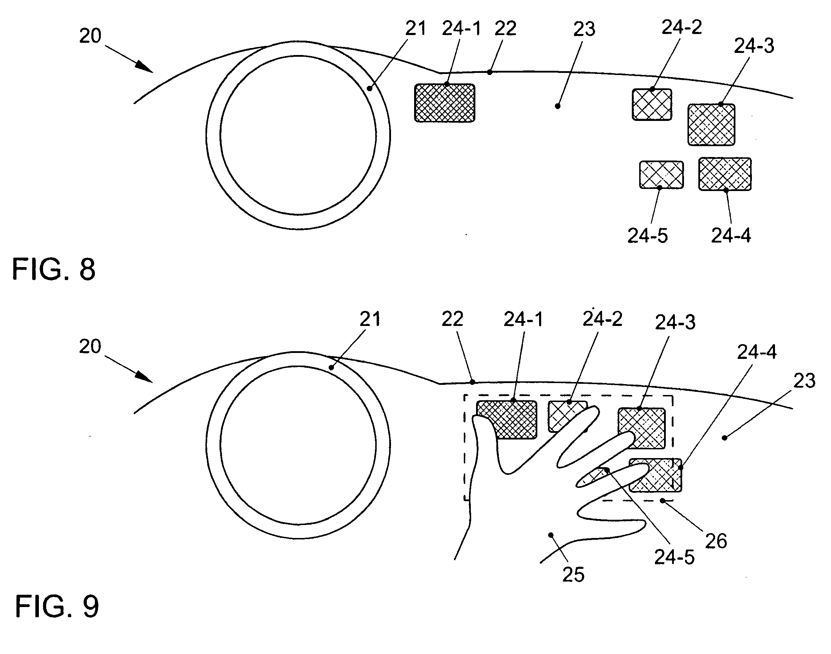

In Fig. 8 ist eine schematische Ansicht eines weiteren Kraftfahrzeugcockpits 20 dargestellt, welches ähnlich zu dem Kraftfahrzeugcockpit nach Fig. 2 ist, wobei auf der Anzeigefläche 23 Anzeigeobjekte 24-1 bis 24-5 im Anzeigemodus dargestellt sind.

In Fig. 9 ist eine Aktivierung des Modifiziermodus für das Kraftfahrzeugcockpit nach Fig. 8 schematisch angedeutet, welcher erneut durch eine Annäherung einer Hand mit aufgespreizten Fingern an die Anzeigefläche 23 aktiviert werden kann. Bei dieser Ausführungsform werden die einzelnen Anzeigeobjekte 24-1 bis 24-5 bei einer Annäherung zumindest mit einem Teil ihres Darstellungsbereichs in den Teilbereich 26 der Anzeigefläche "hineingezogen", während der Modifiziermodus aktiviert wird. Bei einigen Ausführungsformen werden keine Zwischenschritte für die einzelnen Anzeigeobjekte zwischen ihrer Ausgangsdarstellung und ihrer Enddarstellung angezeigt. Hierdurch kann die Rechenleistung begrenzt werden, über die die Steuereinrichtung verfügen muss. In der Modifizierdarstellung können dann erneut die Anzeigeobjekte modifiziert werden. Vorteilhaft ist es in beiden Ausführungsformen, dass während der Modifizierung ein Rechenaufwand reduziert ist, der benötigt wird, um das jeweils modifizierte Anzeigeobjekt während der Modifizierung nachzuführen, da dieses nur in dem Teilbereich bzw. nur mittels des Umrisses zu erfolgen hat.

In Weiterbildungen der Erfindung kann zusätzlich vorgesehen sein, dass in dem Modifiziermodus auch eine Bedienung über virtuelle Bedienelemente der einzelnen Anzeigeobjekte vorgenommen werden kann, indem die entsprechenden Bedienelemente innerhalb des Teilbereichs 26 der Anzeigefläche 23 entsprechend mittels eines Betätigungselements manipuliert, insbesondere berührt, werden. In einem solchen Fall ist es vorteilhaft, wenn jedes Anzeigeobjekt einen Darstellungsbereich umfasst, in dem sich kein virtuelles Bedienelement befindet, so dass eine Berührung innerhalb dieses Darstellungsbereichs verwendet werden kann, um ein entsprechendes Anzeigeobjekt für eine Modifizierung auswählen zu können. Über anschließend an einer beliebigen Position innerhalb des Teilsbereichs ausgeführte Berührgesten kann dann anschließend eine Modifizierung des entsprechenden Anzeigeobjekts ausgeführt werden, ohne dass es zu einer Berührung der virtuellen Bedienelemente und hierüber zu einer Bedienung der hiermit verknüpften Funktionen und/oder Funktionalitäten in dem Kraftfahrzeug und/oder fahrzeugexterner Geräte kommt, die mit diesen virtuellen Bedienelementen verknüpft sind.

Es versteht sich für den Fachmann, dass hier lediglich einfache Ausführungsformen der Erfindung beschrieben sind. Eine Vielzahl von Modifikationen sind möglich.

### Bezugszeichenliste

- 1: Kraftfahrzeug
- 2: Anzeige- und Bedienvorrichtung
- 3: Anzeigevorrichtung
- 4: Anzeigefläche
- 5: Steuereinrichtung
- 6: Anzeigeobjekte
- 7: Erfassungsvorrichtung
- 8: mehrfach berührungsempfindliche Positionserfassungseinheit
- 9: berührungslos messende Positionserfassungseinheit
- 10: Hand
- 11: Gestenerkennungseinheit
- 12: Zeigefinger
- 13: Teilbereich
- 20: Kraftfahrzeugcockpit
- 21: Lenkrad
- 22: Armaturenbrett
- 23: Anzeigefläche
- 24-1, ... 24-6: Anzeigeobjekte
- 25: Hand
- 26: Teilbereich
- 27: Finger
- 28: Pfeile
- 29: Umriss

## Patentansprüche

1. Anzeige- und Bediensystem (2), geeignet für ein Fahrzeug (1), mit nutzerbeeinflussbarer Darstellung von Anzeigeobjekten (6; 24-1 bis 24-6), umfassend eine Anzeigevorrichtung (3) mit einer Anzeigefläche (4; 23),
eine Erfassungsvorrichtung (7), mit der eine Nutzereingabe erfassbar ist,
eine Steuereinrichtung (5), die eine grafische Darstellung der Anzeigeobjekten (6; 24-1 bis 24-6) auf der Anzeigevorrichtung (3) steuert,
**dadurch gekennzeichnet, dass**
über eine Nutzereingabe ein Modifiziermodus aktivierbar ist, in dem eine grafische Darstellung aller Anzeigeobjekte (6; 24-1 bis 24-6) zumindest teilweise in einem Teilbereich (13; 26) der Anzeigefläche erfolgt und in dem Modifiziermodus die Anzeigeobjekte (6; 24-1 bis 24-6) über eine weitere Nutzereingabe hinsichtlich ihrer Position und/oder Größe in dem Teilbereich (13; 26) modifiziert werden können und die Positionsänderungen und Größenskalierungen der Anzeigeobjekte in dem Teilbereich entsprechend einer gewählten Darstellung in dem Teilbereich bei einem Wechsel in den Anzeigemodus entsprechend angepasst werden.

2. Anzeige- und Bediensystem (2) nach Anspruch 1, **dadurch gekennzeichnet, dass** in dem Teilbereich (13; 26) in dem Modifiziermodus die grafische Darstellung der gesamten Anzeigefläche (4; 23), wie sie im Anzeigemodus ausgegeben wird, verkleinert dargestellt ist oder wird.

3. Anzeige- und Bediensystem (2) nach Anspruch 1, **dadurch gekennzeichnet, dass** die Anzeigeobjekte (6; 24-1 bis 24-6) in dem Teilbereich (13; 26) so dargestellt werden, dass von jedem der Anzeigeobjekte (6; 24-1 bis 24-6) zumindest ein Darstellungsbereich nicht durch andere Anzeigeobjekte (6; 24-1 bis 24-6) überdeckt ist und für eine individuelle Berührung das Betätigungselement des Nutzers bereitsteht, um dieses Anzeigeobjekt an- oder auszuwählen.

4. Anzeige- und Bediensystem (2) nach einem der vorangehenden Ansprüche, **dadurch gekennzeichnet, dass** die Erfassungsvorrichtung (7) eine berührungslos messende Erfassungseinheit (8) umfasst, die eine Annäherung eines Betätigungselements des Nutzers als Nutzereingabe erfassen kann.

5. Anzeige- und Bediensystem (2) nach Anspruch 4, **dadurch gekennzeichnet, dass** die Erfassungsvorrichtung (7) eine Gestenerkennungseinheit (11) umfasst und die berührungslos messende Erfassungseinheit (8) eine einer Aktivierung des Modifiziermodus zugeordnete Geste eines Betätigungselements des Nutzers bei einer Annäherung erfassen kann und nur bei Erfassen dieser dem Modifiziermodus zugeordneten Geste den Modifiziermodus automatisch aktiviert.

6. Anzeige- und Bediensystem (2) nach einem der vorangehenden Ansprüche, **dadurch gekennzeichnet, dass** der Teilbereich (13; 26) vollständig in einem Griffbereich des Nutzers festgelegt ist, in dem der auf einem Fahrzeugsitz sitzende Nutzer mit einer als Betätigungselement genutzten Oberkörperextremität jeden Raumpunkt berühren kann und die Anzeigefläche (4; 23) sich aus dem Griffbereich hinaus erstreckt und in dem Anzeigemodus zumindest eines der Anzeigeobjekte (6; 24-1 bis 24-6) vollständig außerhalb des Griffbereichs darstellbar ist oder dargestellt ist.

7. Anzeige- und Bediensystem (2) nach einem der vorangehenden Ansprüche, **dadurch gekennzeichnet, dass** sich die Anzeigefläche (4; 23) in ein Armaturenbrett (22) integrierbar ist und sich vorzugsweise über mehr als eine Hälfte einer Breite des Armaturenbretts (22) erstrecken kann.

8. Anzeige- und Bediensystem (2) nach einem der vorangehenden Ansprüche, **dadurch gekennzeichnet, dass** die Erfassungsvorrichtung (7) eine in die Anzeigefläche (4; 23) integrierte mehrfachberührungsempfindliche Positionserfassungseinheit (9) umfasst.

9. Verfahren zum Betreiben einer Anzeige- und Bedienvorrichtung (2) in einem Fahrzeug (1), die eine Anzeigevorrichtung (3) mit einer Anzeigefläche (4; 23),
eine Erfassungsvorrichtung (7), mit der eine Nutzereingabe erfassbar ist, und
eine Steuereinrichtung (5) umfasst, die eine grafische Darstellung von Anzeigeobjekten (6; 24-1 bis 24-6) auf der Anzeigevorrichtung (3) steuert,
umfassend die Schritte:
Darstellen der Anzeigeobjekte (6; 24-1 bis 24-6) in einem Anzeigemodus verteilt über die Anzeigefläche (4; 23);
Erfassen und Auswerten von Nutzereingaben,
**dadurch gekennzeichnet, dass**
die Nutzereingaben hinsichtlich einer Eingabe zum Aktivieren eines Modifiziermodus ausgewertet werden und bei Erkennen einer solchen Nutzereingabe der Modifiziermodus aktiviert wird, in dem alle Anzeigeobjekte (6; 24-1 bis 24-6) zumindest teilweise in einem Teilbereich (13; 26) der Anzeigefläche (4; 23) dargestellt werden und im Modifiziermodus die Nutzereingaben hinsichtlich solcher ausgewertet werden, die eine Position und/oder Größe eines der Anzeigeobjekte (6; 24-1 bis 24-6) bewirken sollen, und die Anzeigeobjekte (6; 24-1 bis 24-6) entsprechend solcher erkannter Nutzereingaben hinsichtlich ihrer Positionen und/oder Größen in dem Teilbereich (13; 26) modifiziert dargestellt werden und die Positionsänderungen und Größenskalierungen der Anzeigeobjekte in dem Teilbereich entsprechend einer gewählten Darstellung in dem Teilbereich bei einem Wechsel in den Anzeigemodus entsprechend angepasst werden.

10. Verfahren nach Anspruch 9, **dadurch gekennzeichnet, dass** die Anzeigeobjekte (6; 24-1 bis 24-6) in dem Modifiziermodus in dem Teilbereich (13; 26) relativ zueinander hinsichtlich ihrer Positionen und/oder ihrer Größen so dargestellt werden, wie in einem Anzeigemodus, in dem die Anzeigeobjekte (6; 24-1 bis 24-6) verteilt über die gesamte Anzeigefläche (4; 23) dargestellt sind.

11. Verfahren nach Anspruch 9, **dadurch gekennzeichnet, dass** die Anzeigeobjekte (6; 24-1 bis 24-6) in dem Teilbereich (13; 26) so dargestellt werden, dass von jedem der Anzeigeobjekte (6; 24-1 bis 24-6) zumindest ein Darstellungsbereich nicht durch andere Anzeigeobjekte (6; 24-1 bis 24-6) überdeckt ist und für eine individuelle Berührung das Betätigungselement des Nutzers bereitsteht, um dieses Anzeigeobjekt (6; 24-1 bis 24-6) an- oder auszuwählen.

12. Verfahren nach einem der Ansprüche 9 bis 11, **dadurch gekennzeichnet, dass** während des Änderns der Position und/oder der Größe eines der Anzeigeobjekte (6; 24-1 bis 24-6) in dem Teilbereich (13; 26), vorzugsweise zusätzlich zu einer Darstellung in dem Teilbereich (13; 26) zumindest ein Umriss (29) des Anzeigeobjekts (6; 24-1 bis 24-6) an der Stelle und in der Größe dargestellt wird, an der das entsprechende Anzeigeobjekt (6; 24-1 bis 24-6) im Anzeigemodus angezeigt würde oder wird.

13. Verfahren nach einem der Ansprüche 9 bis 12, **dadurch gekennzeichnet, dass** der Teilbereich (13; 26) so festgelegt wird, dass dieser vollständig in einem Griffbereich des Nutzers liegt, in dem der auf einem Fahrzeugsitz sitzende Nutzer mit einer als Betätigungselement genutzten Oberkörperextremität jeden Raumpunkt berühren kann.

## Claims

1. Display and operator control system (2) which is suitable for a vehicle (1), with user-adjustable display of display objects (6; 24-1 to 24-6), comprising a display apparatus (3) having a display area (4; 23), a detection apparatus (7) with which a user input can be detected, a control device (5) which controls graphical display of the display objects (6; 24-1 to 24-6) on the display apparatus (3), **characterized in that** a modification mode can be activated by means of a user input, all of the display objects (6; 24-1 to 24-6) being graphically displayed at least in parts in a subregion (13; 26) of the display area in the modification mode, and it being possible for the display objects (6; 24-1 to 24-6) to be modified in the subregion (13; 26) in respect of their position and/or size by means of a further user input in the modification mode, and the changes in position and scaling operations in respect of the size of the display objects in the subregion being correspondingly adapted in accordance with a selected illustration in the subregion in the event of a change into the display mode.

2. Display and operator control system (2) according to Claim 1, **characterized in that** the graphical display of the entire display area (4; 23), as is output in the display mode, is or will be illustrated on a reduced scale in the subregion (13; 26) in the modification mode.

3. Display and operator control system (2) according to Claim 1, **characterized in that** the display objects (6; 24-1 to 24-6) are displayed in the subregion (13; 26) such that, for each of the display objects (6; 24-1 to 24-6), at least one display region is not covered by other display objects (6; 24-1 to 24-6) and is ready for the operating element of the user to individually touch it in order to call up or select this display object.

4. Display and operator control system (2) according to one of the preceding claims, **characterized in that** the detection apparatus (7) comprises a detection unit (8) which performs measurement in a contactless manner and which can detect an approach of an operating element of the user as the user input.

5. Display and operator control system (2) according to Claim 4, **characterized in that** the detection apparatus (7) comprises a gesture identification unit (11) and the detection unit (8) which performs measurement in a contactless manner can detect a gesture of an operating element of the user, which gesture is associated with activation of the modification mode, when the said operating element is approaching and automatically activates the modification mode only when this gesture which is associated with the modification mode is detected.

6. Display and operator control system (2) according to one of the preceding claims, **characterized in that** the subregion (13; 26) is defined completely within a region which can be reached by the user and in which the user who is seated on a vehicle seat can touch each point in space by way of an extremity of the upper body which is used as the operating element, and the display area (4; 23) extends out of the region which can be reached by the user and at least one of the display objects (6; 24-1 to 24-6) can be displayed or is displayed completely outside the region which can be reached in the display mode.

7. Display and operator control system (2) according to one of the preceding claims, **characterized in that** the display area (4; 23) can be integrated in a dashboard (22) and can extend preferably over more than half of a width of the dashboard (22).

8. Display and operator control system (2) according to one of the preceding claims, **characterized in that** the detection apparatus (7) comprises a multiple touch sensitive position detection unit (9) which is integrated into the display area (4; 23).

9. Method for operating a display and operator control apparatus (2) in a vehicle (1) which comprises a display apparatus (3) with a display area (4; 23), a detection apparatus (7) with which a user input can be detected, and a control device (5) which controls graphical display of display objects (6; 24-1 to 24-6) on the display apparatus (3), comprising the steps of:
displaying the display objects (6; 24-1 to 24-6) in a display mode such that they are distributed over the display area (4; 23); detecting and evaluating user inputs, **characterized in that** the user inputs are evaluated in respect of an input in order to activate a modification mode and, when a user input of this kind is identified, the modification mode is activated, all of the display objects (6; 24-1 to 24-6) being graphically displayed at least in part in a subregion (13; 26) of the display area (4; 23) in the said modification mode and the user inputs in respect of those which should effect a position and/or size of one of the display objects (6; 24-1 to 24-6) being evaluated in the modification mode, and the display objects (6; 24-1 to 24-6) being displayed in modified form in the subregion (13; 26) in respect of their positions and/or sizes in accordance with such identified user inputs and the changes in position and scaling operations in respect of the size of the display objects in the subregion being correspondingly adapted in accordance with a selected illustration in the subregion in the event of a change into the display mode.

10. Method according to Claim 9, **characterized in that** the display objects (6; 24-1 to 24-6) are displayed relative to one another in respect of their positions and/or their sizes in the subregion (13; 26) in the modification mode as in a display mode in which the display objects (6; 24-1 to 24-6) are displayed in a manner distributed over the entire display area (4; 23).

11. Method according to Claim 9, **characterized in that** the display objects (6; 24-1 to 24-6) are displayed in the subregion (13; 26) such that, for each of the display objects (6; 24-1 to 24-6), at least one display region is not covered by other display objects (6; 24-1 to 24-6) and is ready for the operating element of the user to individually touch it in order to call up or to select this display object (6; 24-1 to 24-6).

12. Method according to one of Claims 9 to 11, **characterized in that**, during the change in the position and/or the size of one of the display objects (6; 24-1 to 24-6) in the subregion (13; 26), preferably in addition to displaying it in the subregion (13; 26), at least an outline (29) of the display object (6; 24-1 to 24-6) is displayed at the point at which, and with the size with which, the corresponding display object (6; 24-1 to 24-6) would be or will be displayed in the display mode.

13. Method according to one of Claims 9 to 12, **characterized in that** the subregion (13; 26) is defined such that it lies completely in a region which can be reached by the user and in which the user who is seated on a vehicle seat can touch each point in space by way of an extremity of the upper body which is used as the operating element.

## Revendications

1. Système (2) de commande et d'affichage convenant pour un véhicule (1), affichant sous l'action de l'utilisateur des objets à afficher (6; 24-1 à 24-6), et comprenant
un dispositif d'affichage (3) doté d'une surface d'affichage (4; 23),
un dispositif de détection (7) qui permet de détecter une entrée de l'utilisateur et
un dispositif de commande (5) qui commande la représentation graphique des objets à afficher (6; 24-1 à 24-6) sur le dispositif d'affichage (3),
**caractérisé en ce que**
un mode de modification peut être activé par une entrée par l'utilisateur, dans lequel a lieu une représentation graphique au moins partielle de tous les objets à afficher (6; 24-1 à 24-6) dans une partie (13; 26) de la surface d'affichage,
et dans lequel mode de modification, la position et/ou la taille des objets à afficher (6; 24-1 à 24-6) peuvent être modifiées dans la partie (13; 26) par une autre entrée par l'utilisateur et
un basculement en mode d'affichage permet d'adapter en conséquence les modifications de position et l'échelle de taille des objets affichés dans la partie de manière correspondant à une représentation sélectionnée dans la partie.

2. Système (2) de commande et d'affichage selon la revendication 1, **caractérisé en ce que** dans la partie (13; 26), en mode de modification, la représentation graphique de l'ensemble de la surface d'affichage (4; 23) délivrée en mode d'affichage est ou sera représentée en taille plus petite.

3. Système (2) de commande et d'affichage selon la revendication 1, **caractérisé en ce que** les objets à afficher (6; 24-1 à 24-6) sont représentés dans la partie (13; 26) de telle sorte qu'au moins une partie représentée de chacun des objets à afficher (6; 24-1 à 24-6) ne soit pas recouverte par d'autres objets à afficher (6; 24-1 à 24-6) et soit prête à être actionnée de manière distincte par l'élément d'actionnement de l'utilisateur pour sélectionner ou rejeter cet objet à afficher.

4. Système (2) de commande et d'affichage selon l'une des revendications précédentes, **caractérisé en ce que** le dispositif de détection (7) comporte une unité de détection (8) mesurant sans contact qui permet de détecter l'approche d'un élément d'actionnement de l'utilisateur comme étant une entrée par l'utilisateur.

5. Système (2) de commande et d'affichage selon la revendication 4, **caractérisé en ce que** le dispositif de détection (7) comporte une unité (11) de reconnaissance de gestes et **en ce que** l'unité de détection (8) mesurant sans contact peut détecter un geste associé à une activation du mode de modification d'un élément d'actionnement de l'utilisateur lors de son approche, et active automatiquement le mode de modification seulement lorsque ce geste associé au mode de modification est détecté.

6. Système (2) de commande et d'affichage selon l'une des revendications précédentes, **caractérisé en ce que** la partie (13; 26) est définie complètement dans une zone de saisie de l'utilisateur par le fait que l'utilisateur assis sur un siège du véhicule peut toucher chaque point de l'espace par une extrémité supérieure du corps utilisée comme élément d'actionnement, la surface d'affichage (4; 23) s'étendant au-delà de la zone de saisie et **en ce qu'**en mode d'affichage, au moins l'un des objets à afficher (6; 24-1 à 24-6) peut être représenté ou est représenté complètement à l'extérieur de la zone de saisie.

7. Système (2) de commande et d'affichage selon l'une des revendications précédentes, **caractérisé en ce que** la surface d'affichage (4; 23) peut être intégrée dans un tableau de bord (22) et peut s'étendre de préférence sur plus de la moitié de la largeur du tableau de bord (22).

8. Système (2) de commande et d'affichage selon l'une des revendications précédentes, **caractérisé en ce que** le dispositif de détection (7) comporte une unité (9) de détection de position sensible à des contacts multiples et intégrée dans la surface d'affichage (4; 23).

9. Procédé de fonctionnement d'un dispositif de commande et d'affichage (2) dans un véhicule (1), le dispositif présentant
un dispositif d'affichage (3) doté d'une surface d'affichage (4; 23),
un dispositif de détection (7) qui permet de détecter une entrée de l'utilisateur, et
un dispositif de commande (5) qui commande une représentation graphique d'objets à afficher (6; 24-1 à 24-6) sur le dispositif d'affichage (3),
le procédé comportant les étapes qui consistent à
en mode d'affichage, représenter les objets à afficher (6; 24-1 à 24-6) répartis sur la surface d'affichage (4; 23),
détecter et évaluer des entrées de l'utilisateur, **caractérisé en ce que**
une entrée d'activation d'un mode de modification est recherchée parmi les entrées de l'utilisateur et
**en ce que** le mode de modification dans lequel tous les objets à afficher (6; 24-1 à 24-6) sont représentés au moins en partie dans une partie (13; 26) de la surface d'affichage (4; 23) est activé en cas de détection d'une telle entrée de l'utilisateur, et
en mode de modification, les entrées de l'utilisateur qui doivent agir sur la position et/ou sur la taille de l'un des objets à afficher (6; 24-1 à 24-6) sont recherchées parmi les entrées de l'utilisateur,
et lorsque ces entrées de l'utilisateur sont reconnues, la représentation de la position et/ou de la taille des objets à afficher (6; 24-1 à 24-6) dans la partie (13; 26) est modifiée et
lors d'un retour en mode d'affichage, les modifications de position et la mise à l'échelle de la taille des objets à afficher dans la partie sont adaptées en conséquence de manière correspondant à une représentation 6-7 sélectionnée.

10. Procédé selon la revendication 9, **caractérisé en ce qu'**en mode de modification, la position et/ou la taille relatives des objets à afficher (6; 24-1 à 24-6) dans la partie (13; 26) sont représentées de la même manière qu'en mode d'affichage, les objets à afficher (6; 24-1 à 24-6) étant alors représentés de manière répartie sur toute la surface d'affichage (4; 23).

11. Procédé selon la revendication 9, **caractérisé en ce que** les objets à afficher (6; 24-1 à 24-6) sont représentés dans la partie (13; 26) de telle sorte qu'au moins une partie représentée de chacun des objets à afficher (6; 24-1 à 24-6) ne soit pas recouverte par d'autres objets à afficher (6; 24-1 à 24-6) et soit prête à être actionnée de manière distincte par l'élément d'actionnement de l'utilisateur pour sélectionner ou rejeter cet objet à afficher (6; 24-1 à 24-6).

12. Procédé selon l'une des revendications 9 à 11, **caractérisé en ce que** lors de la modification de la position et/ou de la taille de l'un des objets à afficher (6; 24-1 à 24-6) dans la partie (13; 26), de préférence en plus d'une représentation dans la partie (13; 26), au moins un périmètre (29) de l'objet à afficher (6; 24-1 à 24-6) est représenté à l'emplacement et dans la taille auxquels l'objet à afficher (6; 24-1 à 24-6) correspondant avait été ou est représenté en mode d'affichage.

13. Procédé selon l'une des revendications 9 à 12, **caractérisé en ce que** la partie (13; 26) est définie de telle sorte qu'elle soit située complètement dans une zone de saisie de l'utilisateur, par le fait que l'utilisateur assis sur un siège du véhicule peut toucher chaque point de l'espace par une extrémité supérieure du corps utilisée comme élément d'actionnement.
